# EUROPÄISCHE PATENTSCHRIFT

(11) **EP 0 962 904 B1**
(45) Veröffentlichungstag und Bekanntmachung des Hinweises auf die Patenterteilung: **10.06.2015**
(21) Anmeldenummer: 99107150.7
(22) Anmeldetag: 13.04.1999
(51) Int. Cl.: G08C 17/02, G01D 4/00, G08C 15/00

(54) **Verfahren zum Übertragen von Daten zwischen mindestens zwei Sendeeinheiten und mindestens einer Empfangseinheit auf mindestens einem Übertragungskanal**
Data transmission method between at least two transmitting units and at least one receiving unit on at least one transmission channel
Procédé de transmission de données entre au moins deux unités émettrices et au moins une unité de réception sur au moins un canal de transmission

(30) Priorität: 30.05.1998 DE 19824471
(43) Veröffentlichungstag der Anmeldung: 08.12.1999
(73) Patentinhaber: Prof. Dr. Horst Ziegler & Partner GbR, 70499 Stuttgart-Weilimdorf (DE)
(72) Erfinder: Ziegler, Horst, Prof., Dr., 33100 Paderborn (DE); Ziegler, Martin Andreas, 33100 Paderborn (DE); Ziegler, Ulrike Claudia, 71063 Sindelfingen (DE); Ziegler, Tobias Irmo, 33100 Paderborn (DE)
(74) Vertreter: Ostertag, Reinhard

(56) Entgegenhaltungen:
- EP-A- 0 779 520
- EP-A2- 0 650 304
- US-A- 5 539 394
- US-A- 5 659 303

## Beschreibung

Die Erfindung betrifft ein Verfahren zum Übertragen von Daten zwischen mindestens zwei Sendeeinheiten und mindestens einer Empfangseinheit auf mindestens einem Datenübertragungskanal gemäß dem Oberbegriff des Anspruches 1.

Ein derartiges Verfahren wird z.B. bei drahtlosen Telefonen verwendet. Es hat den Vorteil, daß die Übertragungskapazität des Datenübertragungskanales voll genutzt werden kann. Die Zuordnung der Zeitscheiben zu den einzelnen Sendeeinheiten kann statisch oder dynamisch erfolgen. Voraussetzung des Verfahrens ist, daß auf dem Datenübertragungskanal keine weiteren Nutzer sind, welche sich nicht an die Vergabe der Zeitscheiben und die vorgeschriebenen Kommunikationsprotokolle halten. Da die Verwaltung der von den verschiedenen Sendeeinheiten geschickten Datenströme mit erheblichem Aufwand verbunden ist, stehen derartige Datenübertragungskanäle nicht kostenfrei zur Verfügung.

Die US-A-56 59 303 beschreibt ein Verfahren zum Auslesen von Messtationen, Zur Vermeidung von Kollisionen bei der Datenübertragung wird eine zufällige Variation der Zeitscheibe und der Frequenzen vorgenommen, auf denen die Datenübertragung stattfindet.

Soweit der Öffentlichkeit kostenfreie Frequenzbereiche zur Verfügung gestellt werden, sind dies zum einen Frequenzbänder, die auch von Dauernutzern wie Amateurfunkern oder drahtlosen Kopfhörern und dergleichen belegt sind. Derartige Datenübertragungskanäle sind aber für Datenübertragungszwecke nicht brauchbar. Es stehen ferner Frequenzbänder zur Verfügung, bei denen wenigstens Dauernutzer ausgeschlossen sind und bei denen für jedes Unterband nur ein bestimmter maximaler Duty-Cycle (Nutzungsprozentsatz) für jeden Teilnehmer zulässig ist. Ein derartiges Frequenzband liegt in Europa zwischen 868 und 870 MHz. Je nach Unterband ist der Duty-Cycle auf 0,1%, 1% oder 10% begrenzt, wobei die Mittelungszeit eine Stunde betrifft.

Neben der Begrenzung des Duty-Cycle gibt es keine weiteren technischen Begrenzungen für die Nutzung dieses Frequenzbandes, so daß damit gerechnet werden muß, daß unterschiedliche Benutzer zu beliebig unterschiedlichen Zeiten Daten in unterschiedlichsten Datenformaten übertragen.

Derartig rein zufällig zu Datenübertragung benutzte Datenübertragungskanäle haben den Nachteil, daß ihre mittlere Auslastung nur gering sein kann. Bei bidirektionaler Datenübertragung führt nicht nur jeder fehlgeschlagene Versuch der Datenübertragung selbst sondern auch jeder fehlgeschlagene Versuch der Rückmeldung, daß die Daten korrekt erhalten wurden, dazu, daß die Datenübertragung nochmals gestartet wird. Bei nur unidirektionaler Datenübertragung müssen die Daten mehrfach übertragen werden, z.B. fünfmal in stochastisch vorgegebenen Abständen. Es kommt so zu einer großen Anzahl von fehlgeschlagenen Datenübertragungsversuchen, die die Übertragungskapazität des Kanales weiter reduziert, so daß der Kanal letztlich zusammenbricht. Schon ab 15% Auslastung können stochastisch genützte Datenübertragungskanäle instabil werden; im Mittel liegt die stabile Netto-Nutzbarkeit unter 20%.

Arbeitet man mit Kollisionsüberwachung, wird die Übertragungskapazität eines Datenübertragungskanales ebenfalls vermindert, da das Umschalten einer Sende/Empfangseinheit zwischen Senden und Empfangen verhältnismäßig viel Zeit benötigt. Durch diese Umschaltzeiten wird der Datenübertragungskanal zusätzlich belastet. Auch kann es sein, daß der Datenübertragungskanal schon wieder belegt ist, bis von Empfang auf Senden umgeschaltet wird. Schließlich muß man auch berücksichtigen, daß auf dem Datenübertragungskanal auch schwache Störsender liegen (bei Funk-Datenübertragungskanälen z.B. weiter entfernte Sendeeinheiten), die bei Überwachung des Kanales auf Kollisionen mit berücksichtigt werden, in der Praxis aber einen Sendeversuch nicht relevant stören würden.

Stehen in einem Frequenzband mehrere Datenübertragungskanäle zur Verfügung, so kann man zur Verringerung der Fehlerrate bei der Datenübertragung auch für die Datenübertragung gleichzeitig mehrere Kanäle verwenden, zwischen denen mit einer verglichen mit der Taktzeit der Datenübertragung (Bit-Zeit) kleinen Umschaltzeit umgeschaltet wird. Man kann somit ein Bit empfängerseitig rekonstruieren, wenn nur ein Teil desselben über einen der Kanäle richtig empfangen wurde. Die Störung auf einem Kanal wirkt sich dann nach Art eines weissen Rauschens aus, welches sich über ein Bit hinweg herausmittelt. Damit dieses Verfahren durchgeführt werden kann, benötigt man eine hohe Rechenkapazität. Auch ist der Aufbau einer Verbindung langsam, da Sendeeinheit und Empfangseinheit bis auf einen Bruchteil einer Bit-Zeit synchron laufen müssen. Letzteres läßt sich bei schon aufgebauten Verbindungen leicht realisieren, da der Datenstrom auch zur Synchronisation mitgenutzt werden kann. Hat man aber zwischen verschiedenen Datenübertragungszyklen längere Kommunikationspausen oder muß die Verbindung neu aufgebaut werden, so dauert es lange, bis eine ausreichend gute Synchronisierung von Sendeeinheit und Empfangseinheit erhalten wird. Dies ist insbesondere bei batteriebetriebenen Empfangseinheiten (und auch Sendeeinheiten) nachteilig, da durch die Synchronisation die Batterie belastet wird, ohne bezüglich der Datenübertragung einen Nutzen zu bringen. Dieses Problem ist bei Sendeeinheiten trotz deren hohen Strombedarfs weniger schwerwiegend, da bei typischen Anwendungen wie der Funkauslesung von Verbrauchsmessern, bei der Gebäudeüberwachung usw. die Sendehäufigkeit klein ist. Eine Empfangseinheit muß aber ständig für eine potentielle Datenübertragung bereit sein, und empfindliche Empfangseinheiten haben bei den hier interessierenden hohen Frequenzen auch schon bei reiner Empfangsbereitschaft ohne Datenempfang einen erheblichen Strombedarf. Dem könnte man dadurch begegnen, daß man die Empfangseinheit nur zu bestimmten vorvereinbarten Datenübertragungs-Zeitpunkten aktiviert und vor ein Sendetelegramm einer Sendeeinheit einen Datenkopf setzt, der keine Nutzdaten enthält und dessen Dauer größer ist als die Auszeit der Empfangseinheit. Derartige Verfahren lassen sich aber in Jedermann-Bändern nicht einsetzen, für die es - abgesehen vom maximalen Duty-Cycle - keine Regelungen gibt.

Der vorliegenden Erfindung liegt die Aufgabe zugrunde, die Qualität der Datenübertragung zwischen einer Mehrzahl von Sendeeinheiten und einer Empfangseinheit auf einer Jedermann-Datenübertragungsstrecke zu verbessern.

Diese Aufgabe ist erfindungsgemäß gelöst durch ein Verfahren mit den im Anspruch 1 angegebenen Merkmalen.

Das erfindungsgemäße Verfahren verbindet die hohe effektive Kanalnutzung von Schlitzverfahren (Zeitscheibe und/oder Frequenzscheibe) und deren besondere Eignung für batteriebetriebene getaktete Empfangseinheiten mit der Störunanfälligkeit von statistischen Verfahren sowohl gegenüber periodischen als auch gegenüber zufälligen Störungen. Dieser Vorteil wird erhalten, ohne daß hohe Anforderungen an die Rechenleistung, Bandbreite und hohe Zeit-Synchronität von Empfangseinheit und Sendeeinheit zu erfüllen sind.

Nicht nur der einzelne Nutzer hat durch die erhöhte Sicherheit der Datenübertragung einen Zeitgewinn, auch andere Benutzer profitieren von dem erfindungsgemäßen Verfahren durch die hiermit erhaltene geringere Kanalbelastung wegen Reduzierung von Fehlversuchen.

Typische Anwendungsfälle für das erfindungsgemäße Verfahren umfassen Gruppen von typischerweise 10 bis 100 Sendeeinheiten bis maximal etwa 1000 Sendeeinheiten, die mit einer Empfangseinheit kommunizieren müssen. Sendeeinheiten können z.B. Alarmgeber oder Verbrauchszähler und funkgesteuerte Heizkörperventile oder andere Verbraucher einer Wohnung oder eines Hauses sein.

Vorteilhafte Weiterbildungen der Erfindung sind in Unteransprüchen angegeben.

Mit der Weiterbildung der Erfindung gemäß Anspruch 2 wird erreicht, daß eine erste Gruppe von Sendeeinheiten gezielt nur mit einer ersten Empfangseinheit und eine zweite Gruppe von Sendeeinheiten nur gezielt mit einer zweiten Empfangseinheit zusammenarbeiten können, obwohl sich die Funkzellen, in welchen sich die verschiedenen Sendeeinheiten befinden, überlappen. In der Praxis lassen sich derartige Überlappungen oft nicht verhindern. Funktechnisch muß zum einen gewährleistet sein, daß die zu einer Gruppe gehörenden Kommunikationspartner einander direkt, gegebenenfalls indirekt über eine Zwischenstelle erreichen können. Gleiches gilt für eine andere Gruppe. In der Praxis sind aber die Gruppen so räumlich benachbart, daß man sie nicht rein funktechnisch entkoppeln kann (man denke nur an Verbrauchszähler unterschiedlicher Wohnungen eines Hauses, wo die zu einer Wohnung gehörenden Verbrauchszähler eine Gruppe bilden sollen oder an Alarmanlagen unterschiedlicher Wohnungen eines Hauses oder unterschiedlicher Häuser). Das im Anspruch 2 angegebene Verfahren sorgt für eine datenübertragungsmäßige Entkopplung funktechnisch benachbarter Gruppen von Kommunikationspartnern.

Mit der Weiterbildung der Erfindung gemäß Anspruch 3 ist gewährleistet, daß die Duty-Cycle-Anforderung des verwendeten Jedermann-Kanales eingehalten wird.

Die Weiterbildung der Erfindung gemäß Anspruch 4 kann vorteilhaft sein, wenn die einzelnen Sendeeinheiten jeweils größere Datenmengen übersenden müssen. Man kann dann z.B. in einem Abfragezyklus zunächst nacheinander die sicherheitsrelevanten von den Sendeeinheiten zu überstellenden Daten übertragen und erst nachher in einem zweiten oder weiteren Datenpaket die weniger wichtigen Daten übertragen.

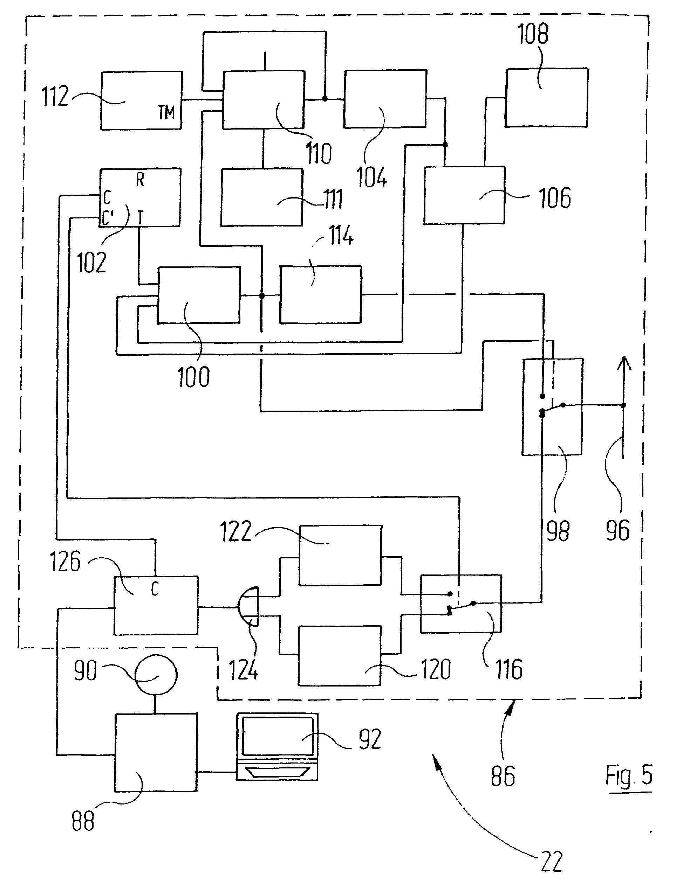

Bei dem in Figur 5 angegebenen Verfahren werden die Zeitfenster für die einzelnen Sendeeinheiten durch interne Präzisionsuhren und mit diesen verbundene Fensterkomparatoren vorgegeben. Dies bedeutet, daß man ein solches Verfahren auch unidirektional anwenden kann, zumindest über längere Zeiträume hinweg unidirektional abwickeln kann.

Die Weiterbildung des Verfahrens gemäß Anspruch 6 erlaubt es, interne Präzisionsuhren zu verwenden, die in den verschiedenen Sendeeinheiten nicht hochgenau übereinstimmen. Das Stellen der Präzisionsuhren kann jeweils nach einer den Fertigungsschwankungen entsprechenden Anzahl von Abfragezyklen erfolgen, bei weniger genauen Präzisionsuhren jeweils zum Anfang oder Ende eines Abfragezyklus.

Dabei wird mit der Weiterbildung der Erfindung gemäß Anspruch 7 erreicht, daß durch ein Stellsignal nur jeweils die internen Präzisionsuhren einer vorgegebenen Gruppe von Sendeeinheiten gestellt werden, nicht aber diejenigen weiteren Sendeeinheiten, die sich in einer überlappenden Funkzelle befinden.

Die Weiterbildung der Erfindung gemäß Anspruch 8 erlaubt das stochastische Variieren des mindestens einen Übertragungsparameters unter Verwendung von einfachen Mitteln. Zufallsgeneratoren können preisgünstig durch die in vielen Programmier-Hochsprachen enthaltenen Zufallsgenerator-Funktionen gebildet werden.

Die Weiterbildung der Erfindung gemäß Anspruch 9 ist wieder im Hinblick auf eine gute datenübertragungsmäßige Entkopplung von Datenübertragungen von Vorteil, die Sendeeinheiten unterschiedlicher Gruppen von Sendeeinheiten betreffen, welche sich in überlappenden Funkzellen befinden.

Die Weiterbildung der Erfindung gemäß Anspruch 10 erlaubt das stochastische Verlegen eines Abfragezyklus unter geringem schaltungsmäßigem Aufwand in den in großer Zahl vorzusehenden Sendeeinheiten.

Die Weiterbildung der Erfindung gemäß Anspruch 11 erlaubt es, die Abfragezyklen stochastisch zu verlegen, obwohl die Sendeeinheiten nicht zum Empfang von Daten ausgelegt sind.

Bei einem Verfahren gemäß Anspruch 12 wird die Phasenlage des Abfragezyklus zur Absolutzeit mit jedem Abfragezyklus stochastisch verändert. Damit findet jede Abfrage unter neuen Bedingungen bezüglich auf dem Kanal sonst liegender Störsignale statt, was die Wahrscheinlichkeit einer korrekten Datenübertragung im folgenden Zyklus erhöht.

Die Weiterbildung der Erfindung gemäß Anspruch 13 ist im Hinblick auf geringen Energieverbrauch von batteriebetriebenen Sendeeinheiten von Vorteil.

Dabei ermöglicht es die Weiterbildung der Erfindung gemäß Anspruch 14, Sendeeinheiten, die auch zum Datenempfang ausgebildet sind, gemeinsam Steuerbefehle zu übermitteln. Es kann sich hierbei nicht nur um Befehle zur Voreinstellung interner Präzisionsuhren handeln, sondern auch um Befehle, welche die Zeitscheibenzuordnung für Sendeeinheiten ändern oder Sendeeinheiten für eine vorbestimmte Zeit völlig totschaltet (z.B. Sensoren einer Überwachungsanlage während der Büroarbeitszeit).

Bei einem Verfahren gemäß Anspruch 15 wird durch die Übertragung der Steuerbefehle nur ein kleiner Anteil der Kapazität des Datenübertragungskanales benötigt.

Ein Verfahren gemäß Anspruch 16 ermöglicht es, daß die Empfangseinheit auch über den jeweiligen Betriebszustand der verschiedenen Sendeeinheiten informiert ist, z.B. über dort auftretende Fehler wie Erschöpfung einer Langzeitbatterie.

Nachstehend wird die Erfindung anhand von Ausführungsbeispielen unter Bezugnahme auf die Zeichnung näher erläutert. In dieser zeigen:
- Figur 1:: eine schematische Ansicht eines Wohnkomplexes und einer Anlage zum Übermitteln des Standes von Verbrauchsmessern, die an unterschiedlichen Stellen verschiedener Wohnungen in verschiedenen Häusern des Komplexes angebracht sind, zu einer Zentrale;
- Figur 2:: ein Blockschaltbild einer Sendeeinheit der in Figur 1 gezeigten Datenübertragungsanlage;
- Figur 3 :: ein Blockschaltbild einer Empfangseinheit der in Figur 1 gezeigten Datenübertragunsanlage;
- Figur 4:: eine ähnliche Ansicht wie Figur 2, in welcher jedoch eine abgewandelte Sendeeinheit wiedergegeben ist;
- Figur 5:: eine ähnliche Ansicht wie Figur 3, in welcher jedoch eine abgewandelte Empfangseinheit wiedergegeben ist, die zu der Sendeeinheit nach Figur 4 paßt;
- Figur 6:: ein zu Figur 2 ähnliches Blockschaltbild einer nochmals abgewandelten Sendeeinheit, die kein mit dem Datenübertragungskanal zusammenarbeitendes Empfangsteil aufweist; und
- Figur 7:: ein Zeitdiagramm, in welchem die Verschachtelung von Zeitscheibenpaketen, innerhalb derer unterschiedliche Gruppen von Verbrauchsmessern senden, dargestellt ist.

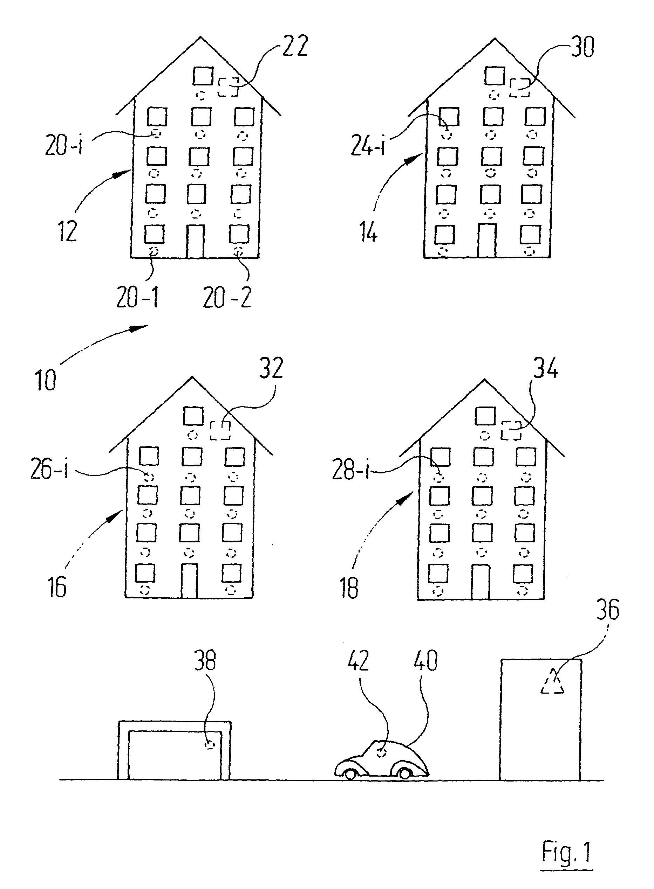

In Figur 1 ist mit 10 insgesamt ein Gebäudekomplex bezeichnet, welcher vier Häuser 12, 14, 16, 18 aufweist.

Im Haus 12 ist eine Vielzahl von Meßeinheiten 20-1, 20-2, ..., 20-i vorgesehen, die jeweils den Verbrauch an einem Verbrauchsgut (Wasser, Wärme, Strom, usw) messen und drahtlos an eine Managementeinheit 22 des Hauses abgeben.

Ähnlich sind in den Häusern 14, 16, 18 Meßeinheiten 24-i, 26-i und 28-i angeordnet, die die verschiedenen Meßwerte an Managementeinheiten 30, 32, 34 weitergeben.

Die Erfindung wird beispielhaft anhand von Meßeinheiten erläutert, es versteht sich, daß man auf gleiche Weise auch bloße Sensoren datenmäßig mit einer Mänagementeinheit koppeln kann, z.B. Brandmelder, Raumüberwachungssensoren, Helligkeitsfühler usw.

Die verschiedenen Managementeinheiten 22, 30, 32, 34 sind ihrerseits über Funkkanäle mit einer zentralen Managementeinheit 36 verbunden, die sich weiter vom Gebäudekomplex 10 entfernt in den Geschäftsräumen einer auf Gebäudemanagement spezialisierten Firma befindet.

Aus Kostengründen wird für die Funkübertragung zwischen den Meßeinheiten und den Managementeinheiten sowie zwischen den Managementeinheiten und der zentralen Managementeinheit ein Jedermann-Funkkanal verwendet. Auf diesem liegen auch Störsignale von weiteren Kanalnutzern, wofür beispielhaft ein funkgesteuerter Garagenantrieb mit einer in der Garage angebrachten Empfangseinheit 38 und einer in einem Fahrzeug angebrachten Sendeeinheit 42 wiedergegeben ist.

Man erkennt, daß die Meßeinheiten 20-i, 24-i, 26-i und 28-i insgesamt einander so nahe sind, daß sich die Funkzellen der Sendeeinheiten, die zu benachbarten Häusern gehören, überlappen.

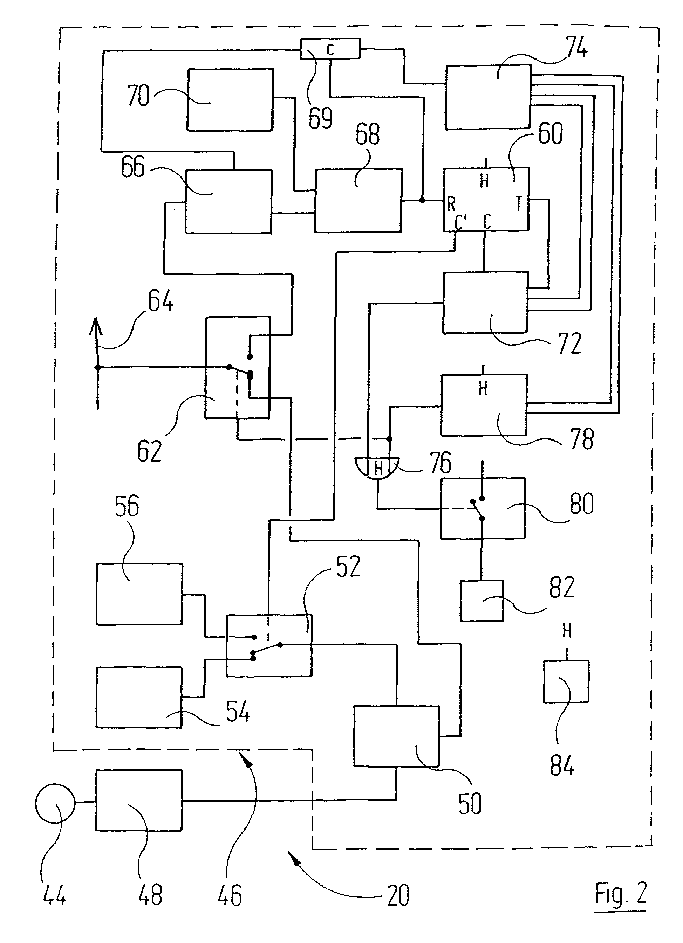

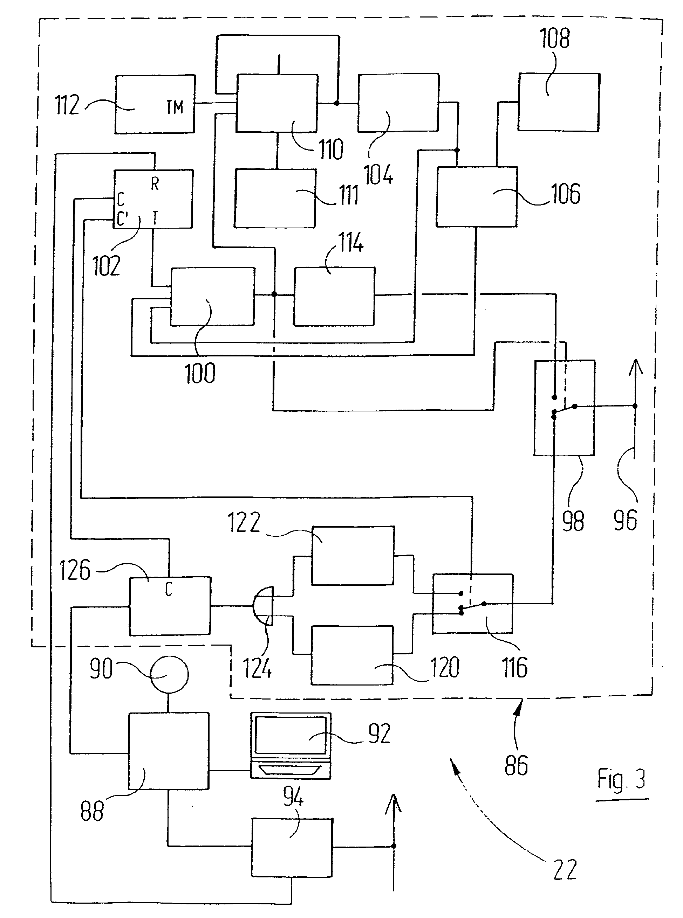

Nachstehend wird unter Bezugnahme auf die Figuren 2 und 3 beschrieben, wie man gewährleisten kann, daß die zu einem Haus gehörenden Managementeinheiten nur diejenigen Daten weiterverarbeiten, die von in demselben Haus befindlichen Meßeinheiten stammen, dagegen nicht auf Daten ansprechen, die von Meßeinheiten aus einem benachbarten Haus stammen. Durch die nachstehend beschriebene Ausbildung der Meßeinheiten und Managementeinheiten wird zugleich auch verhindert, daß auf den Datenübertragungskanälen liegende Störsignale Dritter die Effektivität der Datenübertragung nennenswert mindert.

Wie aus Figur 2 ersichtlich, besteht eine Meßeinheit 20-i aus einem Fühler oder Meßwertaufnehmer 44 und einer insgesamt mit 46 bezeichneten Sendeeinheit.

Der Fühler ist mit einem eingangsseitigen Formatumsetzer 48 der Sendeeinheit 46 verbunden. Dieser digitalisiert gegebenenfalls das Ausgangssignal des Meßwertaufnehmers 44, falls dieser ein analoges Ausgangssignal bereitstellt, und setzt dieses in eine serielle Bitfolge um. Diese Bitfolge wird je nach der verwendeten Modulationsart (z.B. Amplituden- oder Frequenzmodulation) in ein entsprechendes Modulator-Steuersignal umgesetzt, welches auf einen Modulator 50 gegeben wird. Letzterer enthält an seinem zweiten Eingang über eine steuerbare Weiche 52 alternierend von einem ersten Hochfrequenz-Generator 54 oder von einem zweiten Hochfrequenz-Generator 56 ein Trägersignal HF1 bzw. HF2. Die Arbeitsfrequenzen der Hochfrequenz-Generatoren 54 und 56 liegen beide im Jedermannsband zwischen 868 und 870 MHz.

Die Weiche 52 wird von einem Taktausgang C' eines Uhrenkreises 60 her angesteuert, der Taktimpulse bereitstellt, die die doppelte Bitfrequenz (Frequenz, mit der die einzelnen Bits übertragen werden). Die Bitfrequenz steht an einem Ausgang C des Uhrenkreises 60 bereit und dient zum Takten aller mit der seriellen Datenübertragung befaßten Schaltkreise.

Die Bitzeit ist zugleich das gemeinsame Zeitraster für Sendeeinheiten und Empfangseinheit; Vielfache desselben dienen zur Vorgabe der Lage und Länge von Zeitscheiben. Zeitscheiben sind diejenigen aufeinanderfolgenden Zeitspannen, in denen jeweils eine Sendeeinheit Daten an die Empfangseinheit abgeben kann oder sonstige Arbeiten erledigen kann, die in Abstimmung mit den anderen Sendeeinheiten oder der Empfangseinheit der zugeordneten Managementeinheit. abgewickelt werden müssen, insbesondere die Synchroniserung der verschiedenen Sendeeinheiten auf ein gemeinsames Zeitnormal. Ein Abfragezyklus ist die Gesamtdauer aller Zeitscheiben, also die Zeit, die zwischen dem Senden einer ersten Sendeeinheit und einem nmächsten Senden dieser ersten Sendeeinheit verstreicht.

Mittels der Weiche 52 wird das auf den Modulator 50 gegebene Signal alternierend einer Hochfrequenzspannung HF1 und einer Hochfrequenzspannung HF2 aufmoduliert.

Das am Ausgang des Modulators 50 erhaltene modulierte Signal gelangt über eine Sende/Empfangsweiche 62 auf eine Antenne 64.

Der oben angesprochene Uhrenkreis 60 umfaßt einen nicht separat dargestellten freilaufenden Taktgeber, z.B. einen stabilisierten Schwingquarz guter Genauigkeit, der über nicht separat gezeigte Frequenzteiler mit den Taktausgangsklemmen C und C' verbunden ist und über einen weiteren Frequenzteiler ebenfalls nicht sichtbaren Zähler, dessen Stand der internen Zeit in Bittakten entspricht, mit einer Zeit-Ausgangsklemme T des Uhrenkreises 60 verbunden ist. Typischerweise wird die Taktfrequenz z.B. auf 10 kHz eingestellt, so daß man pro Minute 60 000 Taktimpulse hat. Ist der Abfragezyklus eine Minute, so kann man 1000 Zeitscheiben vergeben, die jeweils 600 Bittakte lang sind.

Zum Rückstellen des Uhrenkreises 60 ist ein Demodulator 66 mit dem anderen Ausgang der Sende/Empfangsweiche verbunden. Dieser setzt von einer Managementeinheit erhaltene Steuersignale wieder in Paralleldarstellung um und übergibt einen in diesen enthaltenen und von ihm abgetrennten Synchronisierbefehl an einen Vergleicher 68. Der Vergleicher 68 erhält ein zweites Eingangssignal von einem Festwertspeicher 70. In diesem ist ein spezieller Rückstellcode abgelegt, der allen Meßeinheiten eines Hauses gemeinsam ist, während sich die Rückstellsignale von Meßeinheiten in unterschiedlichen Häusern voneinander unterscheiden. Stellt der Vergleicher 68 fest, daß Eingangssignal und Ausgangssignal (Synchronisierbefehl und Rückstellcode) identisch sind, so gibt er ein Rücksetzsignal auf die "R"-Klemme des Uhrenkreises 60. Auf diese Weise werden die Uhrenkreise aller zu einer Gruppe gehörenden Meßeinheiten durch die zugehörige Empfangseinheit 38 auf den gleichen Ausgangswert (z.B. "0") gesetzt, und die internen Zeiten der Meßeinheiten sind dann identisch.

Der Demodulator trennt ferner aus den Steuersignalen einen Phasenbefehl ab, der angibt, um wieviel der nächste Synchronisierbefehl gegenüber demjenigen Zeitpunkt versetzt sein wird, der sich einfach durch Addieren der Dauer eines Abfragezyklus zum Beginn des derzeitigen Arbeitszyklus ergibt. Dieser Phasenbefehl wird in einem Pufferspeicher 69 abgelegt.

Das T-Ausgangssignal des Uhrenkreises 60 wird auf einen der Eingänge eines Fensterkomparators 72 gegeben. Der zweite Eingang des Fensterkomparators ist mit einer Speicherzelle eines Festwertspeichers 74 verbunden. Diese enthält diejenige interne Zeit, bei welcher das Senden von Meßdaten durch die Meßeinheit 20 beginnen soll. Ein weiterer Eingang des Fensterkomparators 72 ist mit einer anderen Speicherzelle des Festwertspeichers 74 verbunden und erhält so diejenige interne Zeit, bei welcher das Senden von Daten beendet werden soll. Der Fensterkomparator 72 erzeugt immer dann ein positives Ausgangssignal, wenn die interne Zeit innerhalb des oben beschriebenen Sendezeitfensters liegt.

Der Ausgang des Fensterkomparators 72 ist mit dem einen Eingang eines ODER-Gliedes 76 verbunden. Ein zweiter Eingang des ODER-Gliedes ist mit dem Ausgang eines weiteren Fensterkomparators 78 verbunden. Dieser erhält ähnlich, wie oben für den Fensterkomparator 72 beschrieben, aus dem Festwertspeicher 74 zwei Referenzzeiten, zu welchen eine Synchronisierzeitscheibe für die Meßeinheit beginnen bzw. enden soll.

Diese Referenzzeiten werden für jeden Abfragezyklus neu aus dem Pufferspeicher 69 eingelesen, der hierzu durch das Ausgangssignal des Vergleichers 68 aktiviert wird.

Der Ausgang des ODER-Gliedes 76 ist mit dem Steuereingang eines Schalters 80 verbunden, über welchen eine Batterie 82 mit den Leistungsverbrauchern der Meßeinheit verbunden ist, die nur dann benötigt werden, wenn die Meßeinheit Daten abgeben soll oder synchronisiert werden muß. Diejenigen Bausteine, die für die interne Steuerung der Meßeinheit 20 vorgesehen sind, ist eine Haltebatterie 84 vorgesehen. Die durch sie versorgten Komponenten (Uhrenkreis 60, ODER-Glied 76 und Fensterkomparator 78) sind durch ein "H" gekennzeichnet.

Die Festwertspeicher 74-i, die zu den unterschiedlichen Meßeinheiten 20-i gehören, sind jeweils bezüglich der Meßzeitfenster unterschiedlich programmiert, derart, daß sich die Meßzeitfenster nicht überlappen. Auf diese Weise werden die zu den Meßeinheiten gehörenden Sendeeinheiten 46 nacheinander zur Abgabe der zu übertragenden Daten veranlaßt. Die die in aufeinanderfolgenden Zeitscheiben so über Funkwellen übertragenen Daten der einzelnen Meßeinheiten können von der gemeinsamen Managementeinheiten auf Grund ihrer zeitlichen Lage den einzelnen Meßeinheiten zugeordnet werden, so daß die übertragenen Daten keine Signale zur Identifizierung der einzelnen Meßeinheiten zu enthalten brauchen.

Wie aus Figur 3 ersichtlich, umfaßt die zu den Meßeinheiten 20-i gehörige Managementeinheit 22 eine Empfangseinheit 86 und einen an deren Ausgang angeschlossenen Rechner 88. Letzterer hat einen Massenspeicher 90, z.B. eine Festplatte. Er kann mit einem Kontrollrechner 92 verbunden werden, der z.B. durch ein Notebook gebildet sein kann. Ferner arbeitet der Rechner 88 mit einer Sendeeinheit 94 zusammen, deren Aufbau der gleiche sein kann wie derjenige der Sendeeinheit 46.

An eine empfangsseitige Antenne 96 ist eine Sende/Empfangsweiche 98 angeschlossen, die von einem Vergleicher 100 her angesteuert wird. Dieser erhält von einem Uhrenkreis 102, der ähnlich aufgebaut ist wie der Uhrenkreis 60 ein erstes Eingangssignal und von einem Festwertspeicher 104 ein zweites Eingangssignal. Ein Addierkreis 106 ist mit dem Ausgang des Festwertspeichers 104 verbunden und addiert zu dessen Inhalt eine in einem weiteren Festwertspeicher 108 liegende Zahl hinzu, die der Dauer der Steuerungszeitscheibe (Synchronisieren und Übermittlung der Phasenbefehle) entspricht. Der Ausgang des Addierkreises 106 ist mit einem weiteren Eingang des Fensterkomparators 100 verbunden. Der Festwertspeicher 104 wird von einem Zufallsgenerator 110 her eingelesen. Dieser kann z.B. so arbeiten, daß er in Abhängigkeit von seinem Ausgangssignal, dem Inhalt eines Mulitplikator-Speichers 111 und (falls gewünscht) der Echtzeit, die ihm von einer Echtzeituhr 112 übermittelt wird, eine Zufallszahl erzeugt.

Der Inhalt des Multiplikator-Speichers 111 ist für alle Empfangseinheiten des gesamten Datenübertragungssystems einmalig und kann somit auch als ein Gruppen-Identifizierungscode angesehen werden, ähnlich wie die Zeitscheibe, die einer Sendeeinheit zugeordnet ist, als Meßeinheit-Identifizierungscode angesehen werden kann. Auf diese Weise sind die Startpunkte der Abfragezyklen für unterschiedliche Gruppen von Meßeinheiten in unterschiedlicher Weise stochastisch vorgegeben.

Der Schwankungsbereich dieser Zufallszahl ist so gewählt, daß er einem gewünschten zeitlichen Schwankungsbereich der Lage des Synchronisiersignales, durch welches der Uhrenkreis 60 der Meßeinheiten 20-i zurückgestellt wird, entspricht. Der zeitliche Schwankungsbereich der Lage des Synchronisiersignales wird durch Multiplizieren des maximal zulässigen Duty-Cycles des jeweiligen Frequenzbandes mit der Mittelungsdauer für das Frequenzband ermittelt. Im 0, 1% Duty-Cycle-Band erhält man bei einer Mittelungsdauer von einer Stunde einen Schwankungsbereich von mindestens 3,6 Sekunden.

Durch den Inhalt des Festwertspeichers 108 und das Ausgangssignal des Addierkreises 106 sind somit das vordere und hintere Ende der Synchronisier-Zeitscheibe gegeben.

Das Ausgangssignal des Fensterkomparators 100 steuert die Sende/Empfangsweiche 98 in die Sendestellung. Durch das Signal wird ferner ein Synchronisiersignalgenerator 114 angesteuert, der dann über die Antenne 96 das für die zugeordnete Gruppe von Meßeinheiten charakteristische Synchronisiersignal abgibt, das dann von den Empfangseinheiten 20 zum Rückstellen der internen Zeit verwendet wird.

Eine an den anderen Ausgang der Sende/Empfangsweiche 98 angeschlossene Weiche 116 wird wieder durch das C'-Ausgangssignal des Uhrenkreises 102 hin- und hergeschaltet und gibt so das einlaufende Signal auf einen Demodulator 120 für die Frequenz HF1 und einen Demodulator 122 für die Frequenz HF2. Die Ausgänge der beiden Modulatoren 120, 122 werden auf ein ODER-Glied 124 gegeben, das somit eine ähnliche Funktion wie ein Integrator erfüllt. Das Ausgangssignal des ODER-Gliedes 124 kommt auf eine mit dem C-Ausgangssignal des Uhrenkreises 102 getakteten Formatumsetzer 126, der die einlaufenden Bits wieder in ein für die weitere Auswertung gewünschtes Format umsetzt, z.B. Paralleldarstellung. Dieses Signal wird auf eine Schnittstelle des Rechners 88 gegeben, der zugleich mit der internen Zeit der Empfangseinheit 86 beaufschlagt ist, die vom Uhrenkreis 102 abgegeben ist. Aus der internen Zeit kann der Rechner 88 Anfang und Ende eines Datensatzes erkennen und diesen einer bestimmten Meßeinheit zuordnen. Die Daten können dann auf dem Massenspeicher 90 abgelegt werden.

Eine Ausgangs-Schnittstelle des Rechners 88 ist mit der Sendeeinheit 94 verbunden, die gleichen internen Aufbau aufweist wie die Sendeeinheit 20 nach Figur 2. Nur ist an die Sendeeinheit 94 der Rechner 88 als Datenquelle angeschlossen, während dies bei der Sendeeinheit 20 gemäß Figur 2 die durch den Meßwertaufnehmer 44 und den Formatumsetzer 48 gebildete Einheit war. Auf diese Weise kann die Managementeinheit 22 auf gleiche Weise mit der übergeordneten Managementeinheit 36 kommunizieren, und die Datenübertragung zwischen diesen beiden Einheiten kann genauso organisiert werden wie die Datenübertragung zwischen den Meßeinheiten 20 und der Managementeinheit 22. Auch kann die hierarchisch übergeordnete Managementeinheit 36 die interne Zeit der Managementeinheit 22 zurücksetzen, ähnlich wie dies die Sendeeinheit 94 für die Meßeinheiten 20 besorgt.

Damit läßt sich sowohl auf der Ebene der unteren Gruppen als auch auf der Ebene höherer Gruppen ein gemischt nach dem Zeitscheibenprinzip und dem Prinzip stochastischer Sendezeitpunkte arbeitendes Datenübertragungssystem aufbauen.

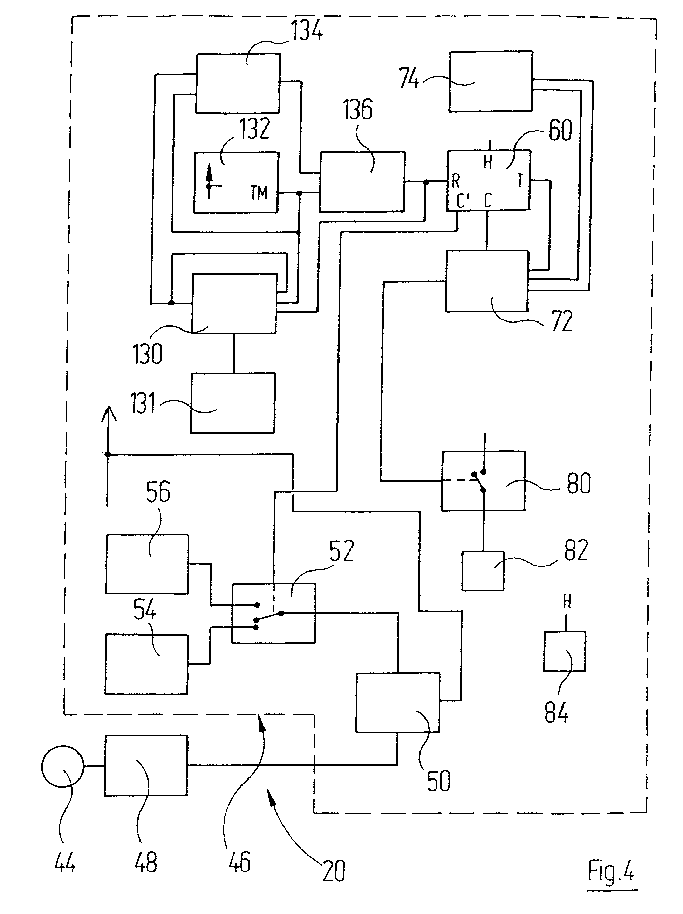

Obenstehend wurde unter Bezugnahme auf die Figuren 2 und 3 der Aufbau einer Meßeinheit 20 und einer Managementeinheit 22 beschrieben. Die den Häusern 14, 16 und 18 zugeordneten Meßeinheiten 24, 26, 28 und Managementeinheiten 30, 32, 34 haben ähnlichen Aufbau. Die Managementeinheit 36 enthält, wie schon dargelegt, eine Empfangseinheit, die vom Aufbau her der Empfangseinheit 86 entspricht. Soweit die in Figur 4 gezeigte abgewandelte Meßeinheit derjenigen gemäß Figur 2 entspricht, sind ihre Komponenten wieder mit denselben Bezugszeichen versehen. Diese brauchen nachstehend auch nicht nochmals beschrieben werden.

Die Meßeinheit nach Figur 4 unterscheidet sich von derjenigen nach Figur 2 in erster Linie durch die Erzeugung des Rückstellsignales für den Uhrenkreis 60. Hierzu wird ähnlich vorgegangen wie in der Empfangseinheit gemäß Figur 3 zur Festlegung des Synchronisiersignalfensters vorgegangen wird: ein Zufallsgenerator 130, der im Aufbau und dem verwendeten Zufallserzeugungsalgorithmus dem Zufallsgenerator 110 vollständig entspricht, ist am einen Eingang wieder mit seinem Ausgangssignal, an einem weiteren mit dem Inhalt eines Multiplikator-Speichers 131, der dem des gruppenspezifischen Multiplikatorspeichers 111 entspricht, und am letzten Eingang mit dem Absolutzeit-Ausgangssignal TM einer Echtzeituhr 132 beaufschlagt. Der Ausgang des Zufallsgenerators 130 ist mit dem einen Eingang eines Addierkreises 134 verbunden, dessen zweiter Eingang mit dem Ausgang der Echtzeituhr 132 verbunden ist. Der Ausgang des Addierkreises 134 und der Ausgang der Echtzeituhr 132 sind mit den beiden Eingängen eines Vergleichers 136 verbunden. Dessen Ausgangssignal dient zum Rücksetzen des Uhrenkreises 60.

Figur 5 zeigt eine abgewandelte Managementeinheit 22, die in sich autark ist und nicht mit einer übergeordneten Managementeinheit zusammenarbeitet. Deren Uhrenkreis 102 stellt sich automatisch durch Überlauf zurück.

In weiterer Abwandlung der Erfindung können die Echtzeituhren jeweils Funkuhrenmodule sein, die in regelmäßigen Abständen über Langwelle auf Normalzeit gestellt werden, so daß die Synchronisierung der verschiedenen Echtzeituhren ohne Belastung des für die Datenübertragung zwischen Meßeinheiten und Managementeinheiten dienenden Übertragungskanales erfolgen kann.

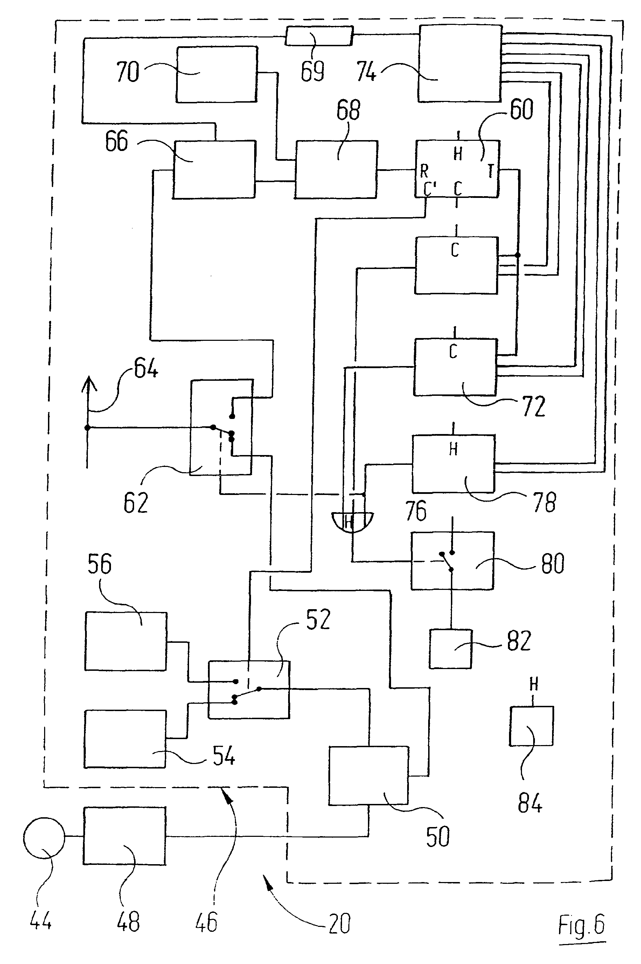

Bei dem weiter abgewandelten Ausführungsbeispiel nach Figur 6 umfaßt der Festwertspeicher 70 eine Mehrzahl von Paaren von Speicherzellen, die jeweils Anfangszeitpunkt und Endzeitpunkt eines Sendefensters vorgeben. Entsprechend ist eine Mehrzahl von Fensterkomparatoren 72 vorgesehen.

Bei dieser Ausführungsform der Meßeinheit können ausgewählte Meßeinheiten innerhalb eines Abfragezyklus (Zeitspanne zwischen dem Rücksetzen der Uhrenkreise 102) jeweils mehrere Datenpakete an die Managementeinheit abgeben oder besonders umfangreiche Datenpakete auf zwei Zeitscheiben verteilt an die Managementeinheit übermitteln.

Datenübertragungssysteme, wie sie oben beschrieben wurden, können typischerweise folgende Eigenschaften aufweisen: Bei Verwendung handelsüblicher Uhrenkreise erhält man die typische erforderliche Genauigkeit der Vorgabe der Zeitscheiben mit einer Länge von 1 bis 10 msec durch Synchronisation etwa alle 5 Minuten. Hierdurch wird der Datenübertragungskanal nur wenig belastet. Bei einem Abfragezyklus mit einer Gesamtdauer von einer Minute kann man 1000 Zeitscheiben zu jeweils 60 msec vorgeben. Man kann so eine große Anzahl von Meßeinheiten an eine Managementeinheit anschließen. Die Verschiebung des Beginns der Abfragezyklen, welche man auch als Pause statistischer Länge zwischen aufeinanderfolgenden Abfragezyklen ansehen kann, kann bei 3,6 Sekunden liegen. Sieht man eine Mindest-Pausendauer von einer Sekunde vor, so schwanken die Abstände zwischen aufeinanderfolgenden Abfragezyklen etwa zwischen 1 und 5 Sekunden.

Oben wurde dargelegt, daß sich die Zufallsgeneratoren für unterschiedliche Gruppen von Meßeinheiten unterscheiden.

Dies kann man unter Einsatz von Zufallsgeneratoren einiger Hochsprachen auf folgende Weise realisieren: Diese Zufallsgeneratoren arbeiten meistens in Abhängigkeit von einem Synchronisierwert und einer Multiplikationskonstanten. Durch Multiplikation der Anfangszahl mit dem Multiplikator und Herausschneiden von einigen Stellen im hinteren Drittel des vielstelligen Ergebnisses erzeugt man eine erste Zufallszahl. Aus dieser erhält man dann durch weitere Multiplikation und Ausschneiden einer Zeichenfolge im hinteren Teil des Ergebnisses eine weitere Zufallszahl usw. Die Zufallszahlen sind somit zwar statistisch verteilt, ausgehend von dem gleichen Ausgangswert und der gleichen Multiplikationskonstante erhält man aber immer die gleiche Abfolge von Zufallszahlen. Die Zufallszahlen sind somit determiniert.

Dadurch, daß man den Ausgangswert und/oder die Multiplikationskonstante abändert, kann man einen anderen Zufallszahlengenerator erzeugen, der unkorreliert zum ersten Zufallszahlengenerator ist, usw..

Auf diese Weise ist sichergestellt, daß auch mehrere Gruppen von Meßeinheiten, welche sich durch unterschiedliche Gruppencodes (entspricht Synchronisiersignalcode) unterscheiden, mit unterschiedlichen Zufallszahlen-Folgen arbeiten. Damit können sie auch dann nur zufällig kollidieren, wenn sie in derselben Funkzelle liegen.

Verwendet man derartige unkorrelierte Zufallszahlen-Generatoren, so erhält man bei einem im zeitlichen Mittel zu 10% belegten Funkkanal beim ersten Versuch mit 90% Wahrscheinlichkeit eine korrekte Datenübertragung, mit zwei Versuchen eine Wahrscheinlichkeit für korrekte Datenübertragung von 99% usw.

Auch beliebige Fremdstörer mit zufälliger Kanalbelegung und auch Fremdstörer mit periodischer oder anderer deterministischer Kanalbelegung werden auf diese Weise zu stochastischen Störern mit bekannter Verteilungsfunktion.

Wie dargelegt, muß die nächste Zufallszahl anders als bei Multiplexverfahren nicht mehrmals innerhalb einer Bitzeit sondern nur jeweils einmal pro Abfragezyklus, also pro Zeitscheibenblock berechnet werden, z.B. jede Minute.

Bei Verwendung der oben beschriebenen Datenübertragungssysteme zählt die Synchronisationsanforderung nur im Bereich von msec anstelle von µsec.

Weiter ist an den oben beschriebenen Datenübertragungssystemen vorteilhaft, daß auch bei nur zeitweise aktiven Empfangseinheiten die Empfangseinheiten ihre Empfangsbereitschaft entsprechend den ihnen innerhalb ihrer Gruppe zugewiesenen Empfangszeitscheiben pseudostatistisch mitverschieben. Trotzdem erreichen sie eine Sendeeinheit ihrer Gruppe stets in einem Zeit/Frequenz-Fenster, welches eine starre Lage bezüglich des stochastischen Beginns des Abfragezyklus aufweist.

Obenstehend wurde die Erfindung anhand von Ausführungsbeispielen besprochen, bei denen zwei Frequenz-Subkanäle innerhalb des jeweiligen Jedermann-Frequenzbandes benutzt wurde. Es versteht sich, daß man die Erfindung gleichermaßen für Datenübertragungssysteme verwenden kann, die nur in einem einzigen Frequenz-Subkanal arbeiten. Auch kann man statt Umschalten zwischen zwei Frequenz-Subkanälen auch zwischen zwei unterschiedlichen Modulationsverfahren umschalten (z.B. zwischen Amplitudenmodulation und Frequenzmodulation). Wiederum wahlweise kann man auch andere die Funkübertragung beeinflussende Parameter umschalten. Das Umschalten wurde obenstehend so beschrieben, daß es (bei zwei Frequenz-Subkanälen) jeweils zweimal pro Bitzeit (Takt am Ausgang "C" des Uhrenkreises 60) erfolgt.

Es versteht sich, daß man auch eine größere Anzahl von die Datenübertragung bestimmenden Parametern umschalten kann. Immer wird durch die stochastische für eine Gruppe spezifische Verlegung von Abfragezyklus (und damit den einzelnen Zeitscheiben) sichergestellt, daß man eine zuverlässige Datenübertragung erhält, auch wenn sich in derselben Funkzelle nicht zur Gruppe gehörende weitere Sendeeinheiten befindet. Auch erhält man so eine gleichmäßige Nutzung eines Frequenzkanales oder mehrerer Frequenz-Subkanäle. Durch den steten Wechsel zwischen einer Mehrzahl von Frequenz-Subkanälen wird auch der störende Einfluß von durch Vielfachreflexionen bedingten Interferenzauslöschungen verringert, da sich diese bei Frequenzänderungen (und damit entsprechenden Änderungen der Wellenlänge) jeweils etwas verändern, wodurch zumindest der besonders störende Fall der totalen Interferenz-Auslöschung vermieden werden kann.

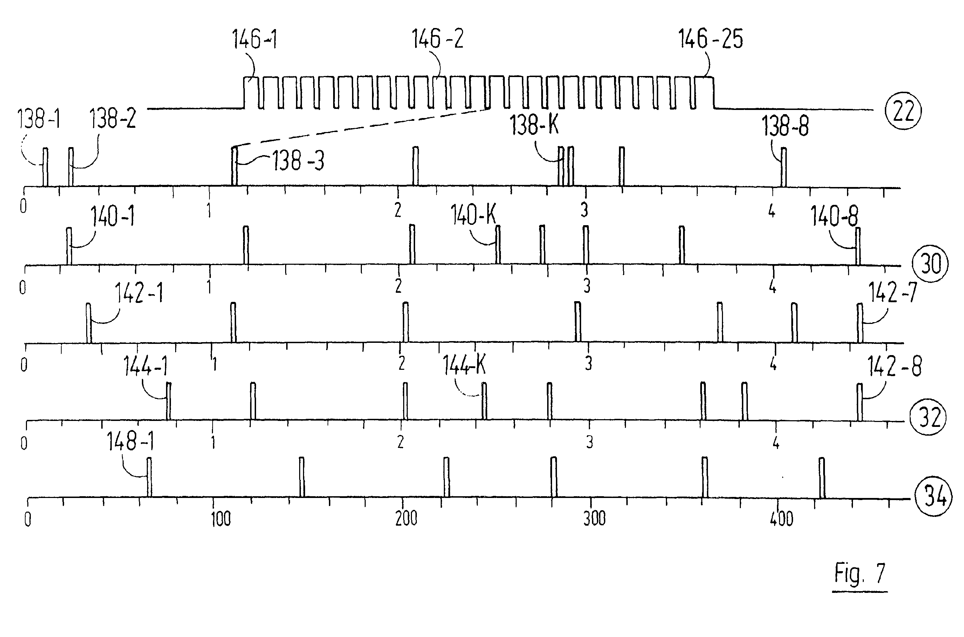

In Figur 7 ist über der Zeit (willkürliche Einheiten) aufgetragen, in welchen Zeitbereichen die Verbrauchsmesser 20-i, 24-i, 26-i und 28-i senden, welche den Managementeinheiten 22, 30, 32 und 34 zugeordnet sind.

Die verschiedenen Managementeinheiten geben jeweils statistisch verteilte Zeitscheibenpakete 138-k, 140-k, 142-k und 144-k vor. Jedes dieser Zeitscheibenpakete besteht aus einer äquidistanten Folge von einzelnen Zeitscheiben 146-1, wie für ein Zeitscheibenpaket 138-3 dargestellt. Innerhalb jeder dieser Zeitscheiben 146-1 sendet der zugeordnete Verbrauchsmesser 20-1, wie obenstehend im einzelnen beschrieben, wobei jede der Zeitscheiben 146-1 ihrerseits eine vorgegebene Anzahl von Bittakten umfaßt, wie ebenfalls schon dargelegt.

Man erkennt, daß es Zeitbereiche gibt, in denen sich die zu unterschiedlichen Gruppen gehörenden Zeitscheibenpakete überlappen, was zu Übertragungsfehlern führt. Ein solcher Zeitpunkt liegt beispielsweise bei t = 0,25 für die Managementeinheiten 22 und 30 und bei t = 2,05 für die Managementeinheiten 30 und 32. Man erkennt aber, daß schon innerhalb von zwei Zeiteinheiten alle Zeitscheibenpakete einmal ungestört übertragen werden konnten.

In der untersten Teilfigur von Figur 7 ist in um den Faktor 100 komprimiertem Maßstab der Datenaustausch zwischen der zentralen Managementeinheit 36 und den Gruppen-Managementeinheiten 22, 30, 32 und 34 wiedergegeben. Dieser erfolgt in größeren zeitlichen Abständen, weil die zentrale Managementeinheit 36 nur über langfristigere Veränderungen der Verbrauchsmesserstände informiert zu sein braucht. Die Organisation und Abwicklung des Datenaustausches ist aber ähnlich wie zwischen den Gruppen-Managementeinheiten 22, 30, 32, 34 und den Meßeinheiten 20-i, 24-i, 26-i und 28-i.

## Patentansprüche

1. Verfahren zum Übertragen von Daten zwischen mindestens zwei Sendeeinheiten (42) und einer Empfangseinheit (86) auf einem Datenübertragungskanal, der auch von anderen Benutzern in Anspruch genommen wird, welche zu beliebig unterschiedlichen Zeiten Daten in unterschiedlichen Datenformaten übertragen, bei welchem die Sendeeinheiten jeweils in einer bezogen auf den Beginn eines Abfragezyklus für sie spezifisch vorgegebenen Zeitscheibe senden, wobei ein Abfragezyklus die Gesamtdauer aller Zeitscheiben ist, die zwischen dem Senden einer Sendeeinheit und einem zweiten Senden derselben liegt, **dadurch gekennzeichnet, dass** der Beginn eines Abfragezyklus stochastisch variiert wird.

2. Verfahren nach Anspruch 1, **dadurch gekennzeichnet, dass** für eine erste Gruppe von Sendeeinheiten (42) und eine erste Empfangseinheit (86) einerseits und eine zweite Gruppe von Sendeeinheiten (42) und eine zweite Empfangseinheit (86) andererseits ein oder mehrere der Übertragungsparameter in unterschiedlicher Weise stochastisch variiert werden.

3. Verfahren nach Anspruch 1 oder 2, **dadurch gekennzeichnet, dass** das Verhältnis zwischen der Länge einer Sende-Zeitscheibe einer Sendeinheit (42) zur Länge eines Abfragezyklus höchstens dem maximal zulässigen Duty Cycle für den Übertragungskanal entspricht.

4. Verfahren nach einem der Ansprüche 1 bis 3, **dadurch gekennzeichnet, dass** jeder Sendeeinheit (42) innerhalb eines Abfragezyklus mehrere zeitlich beabstandete Sende-Zeitscheiben fest zugeteilt werden.

5. Verfahren nach einem der Ansprüche 1 bis 4, **dadurch gekennzeichnet, dass** die Sende-Zeitscheiben der einzelnen Sendeeinheiten (42) durch interne Präzisionsuhren (60) der Sendeeinheiten vorgegeben sind.

6. Verfahren nach Anspruch 5, **dadurch gekennzeichnet, dass** die internen Präzisionsuhren in zeitlichen Abständen auf einen vorgegebenen Stand gesetzt werden.

7. Verfahren nach Anspruch 6, **dadurch gekennzeichnet, dass** das Vorsetzen der internen Präzisionsuhren (60) einer Gruppe von Sendeeinheiten (42) unter Verwendung eines für die Gruppe spezifischen Synchronisierbefehles erfolgt, der den entsprechenden Sendeinheiten (42) von der zugeordneten Empfangseinheit (86) überstellt wird.

8. Verfahren nach einem der Ansprüche 1 bis 7, **dadurch gekennzeichnet, dass** das stochastische Variieren des mindestens einen Übertragungsparameters durch das Ausgangssignal eines Zufallsgenerators (110) erfolgt.

9. Verfahren nach Anspruch 8, **dadurch gekennzeichnet, dass** für mehrere Empfangseinheiten (86), die jeweils mit einer Mehrzahl von Sendeeinheiten (42) zusammenarbeiten, unterschiedliche arbeitende Zufallsgeneratoren (110) verwendet werden.

10. Verfahren nach einem der Ansprüche 1 bis 9 in Verbindung mit Anspruch 6, **dadurch gekennzeichnet, dass** der Zufallsgenerator (110) Teil der Empfangseinheit ist und der Stand der internen Präzisionsuhren (60) in Abhängigkeit von den über den Datenübertragungskanal übermittelten Ausgangssignal des Zufallsgenerators gesetzt wird.

11. Verfahren nach einem der Ansprüche 1 bis 9 in Verbindung mit Anspruch 10, **dadurch gekennzeichnet, dass** die internen Präzisionsuhren (60) zumindest über eine Vielzahl von Abfragezyklen freilaufende Präzsisionsuhren sind und dass die Sendeeinheiten (42) jeweils identische Zufallsgeneratoren aufweisen, welche den Beginn eines Abfragezyklus vorgeben.

12. Verfahren nach einem der Ansprüche 1 bis 11, **dadurch gekennzeichnet, dass** der mindestens eine stochastisch variierte Übertragungsparameter jeweils bei Beginn oder Ende eines Abfragezyklus stochastisch variiert wird.

13. Verfahren nach einem der Ansprüche 1 bis 12, **dadurch gekennzeichnet, dass** Leistungs-Energieversorgungen (82) der Sendeineinheiten (42) im wesentlichen nur für die Dauer der der jeweils betrachteten Sendeeinheit (42) zugeordneten Sende-Zeitscheibe aktiviert werden.

14. Verfahren nach Anspruch 13, **dadurch gekennzeichnet, dass** die Energieversorgungen (82) für die Sendeeinheiten (42) zusätzlich für eine allen Sendeeinheiten (42) gemeinsame Steuerungszeitscheibe aktiviert werden.

15. Verfahren nach Anspruch 14, **dadurch gekennzeichnet, dass** die Länge der Steuerungs-Zeitscheibe nur einen Bruchteil des Abfragezyklus beträgt.

16. Verfahren nach Anspruch 14 oder 15, **dadurch gekennzeichnet, dass** jeweils eine der Zeitscheiben, die einer Sendeinheit (42) zugeteilt sind, zur Quittierung von erhaltenen Steuerbefehlen und/oder zur Rückmeldung von Informationen über den Betriebszustand der Sendeeinheit (42) verwendet wird.

## Claims

1. Process for transmitting data between at least two transmitter units (42) and a receiver unit (86) on a data transmission channel which is also called upon by other users which transmit data in differing data formats at arbitrarily different times, wherein the transmitter units each transmit in a time slice specifically predetermined for them with reference to the start of an interrogation cycle, an interrogation cycle being the total duration of all the time slices that lies between the transmitting of a transmitter unit and a second transmitting of the same, **characterised in that** the start of an interrogation cycle is varied stochastically.

2. Process according to Claim 1, **characterised in that** for a first group of transmitter units (42) and a first receiver unit (86), on the one hand, and a second group of transmitter units (42) and a second receiver unit (86), on the other hand, one or more of the transmission parameters is/are varied stochastically in varying manner.

3. Process according to Claim 1 or 2, **characterised in that** the ratio of the length of a transmitting time slice of a transmitter unit (42) to the length of an interrogation cycle corresponds to, at most, the maximally permissible duty cycle for the transmission channel.

4. Process according to one of Claims 1 to 3, **characterised in that** several temporally spaced transmitting time slices are permanently allocated to each transmitter unit (42) within an interrogation cycle.

5. Process according to one of Claims 1 to 4, **characterised in that** the transmitting time slices of the individual transmitter units (42) have been predetermined by internal precision clocks (60) of the transmitter units.

6. Process according to Claim 5, **characterised in that** the internal precision clocks are set to a predetermined state at temporal intervals.

7. Process according to Claim 6, **characterised in that** the pre-setting of the internal precision clocks (60) of a group of transmitter units (42) is undertaken using a synchronising command specific to the group, which is transferred to the corresponding transmitter units (42) from the assigned receiver unit (86).

8. Process according to one of Claims 1 to 7, **characterised in that** the stochastic varying of the at least one transmission parameter is undertaken by the output signal of a random-number generator (110).

9. Process according to Claim 8, **characterised in that** differing operating random-number generators (110) are used for several receiver units (86) which each cooperate with a plurality of transmitter units (42).

10. Process according to one of Claims 1 to 9 in conjunction with Claim 6, **characterised in that** the random-number generator (110) is part of the receiver unit and the state of the internal precision clocks (60) is set in a manner depending on the output signal of the random-number generator communicated via the data-transmission channel.

11. Process according to one of Claims 1 to 9 in conjunction with Claim 10, **characterised in that** the internal precision clocks (60) are precision clocks that are free-running at least over a plurality of interrogation cycles, and **in that** the transmitter units (42) each exhibit identical random-number generators which predetermine the start of an interrogation cycle.

12. Process according to one of Claims 1 to 11, **characterised in that** the at least one stochastically varied transmission parameter is varied stochastically in each instance at the start or end of an interrogation cycle.

13. Process according to one of Claims 1 to 12, **characterised in that** power/energy supplies (82) of the transmitter units (42) are activated substantially only for the duration of the transmitting time slice assigned to the transmitter unit (42) under consideration in the given case.

14. Process according to Claim 13, **characterised in that** the energy supplies (82) for the transmitter units (42) are additionally activated for a controlling time slice that is common to all the transmitter units (42).

15. Process according to Claim 14, **characterised in that** the length of the controlling time slice amounts to only a fraction of the interrogation cycle.

16. Process according to Claim 14 or 15, **characterised in that** in each instance one of the time slices that have been allocated to a transmitter unit (42) is used for acknowledging received control commands and/or for the feedback of information concerning the operating state of the transmitter unit (42).

## Revendications

1. Procédé de transmission de données entre au moins deux unités d'émission (42) et une unité de réception (86) sur un canal de transmission de données qui est aussi utilisé par d'autres utilisateurs qui transmettent des données dans différents formats de données à des temps différents quelconques, selon lequel les unités d'émission émettent chacune dans une tranche de temps spécifiquement prédéfinie pour elle par rapport au début d'un cycle d'interrogation, un cycle d'interrogation étant la durée totale de toutes les tranches de temps qui se situent entre l'émission d'une unité d'émission et une deuxième émission de la même unité d'émission, **caractérisé en ce que** le début d'un cycle d'interrogation varie stochastiquement.

2. Procédé selon la revendication 1, **caractérisé en ce qu'**un ou plusieurs des paramètres de transmission varient stochastiquement de façon différente pour un premier groupe d'unités d'émission (42) et une première unité de réception (86) d'une part, et un deuxième groupe d'unités d'émission (42) et une deuxième unité de réception (86) d'autre part.

3. Procédé selon la revendication 1 ou 2, **caractérisé en ce que** le rapport entre la longueur d'une tranche de temps d'émission d'une unité d'émission (42) et la longueur d'un cycle d'interrogation correspond au plus au cycle de service maximum admissible pour le canal de transmission.

4. Procédé selon l'une des revendications 1 à 3, **caractérisé en ce que** plusieurs tranches de temps d'émission espacées dans le temps sont attribuées de manière fixe à chaque unité d'émission (42) à l'intérieur d'un cycle d'interrogation.

5. Procédé selon l'une des revendications 1 à 4, **caractérisé en ce que** les tranches de temps d'émission des différentes unités d'émission (42) sont prédéfinies par des horloges de précision internes (60) des unités d'émission.

6. Procédé selon la revendication 5, **caractérisé en ce que** les horloges de précision internes sont réglées à un état prédéfini à intervalles réguliers.

7. Procédé selon la revendication 6, **caractérisé en ce que** le préréglage des horloges de précision internes (60) d'un groupe d'unités d'émission (42) s'effectue en utilisant une instruction de synchronisation spécifique au groupe, qui est fournie aux unités d'émission (42) correspondantes par l'unité de réception (86) associée.

8. Procédé selon l'une des revendications 1 bis 7, **caractérisé en ce que** la variation stochastique dudit au moins un paramètre de transmission est réalisée par le signal de sortie d'un générateur aléatoire (110).

9. Procédé selon la revendication 8, **caractérisé en ce que** des générateurs aléatoires (110) différents sont utilisés pour plusieurs unités de réception (86) qui coopèrent chacune avec une pluralité d'unités d'émission (42).

10. Procédé selon l'une des revendications 1 à 9 en combinaison avec la revendication 6, **caractérisé en ce que** le générateur aléatoire (110) fait partie de l'unité de réception et l'état des horloges de précision internes (60) est réglé en fonction du signal de sortie du générateur aléatoire transmis via le canal de transmission de données.

11. Procédé selon l'une des revendications 1 à 9 en combinaison avec la revendication 10, **caractérisé en ce que** les horloges de précision internes (60) sont des horloges de précision non synchronisées au moins sur une pluralité de cycles d'interrogation et que les unités d'émission (42) présentent chacune des générateurs aléatoires identiques qui prédéfinissent le début d'un cycle d'interrogation.

12. Procédé selon l'une des revendications 1 à 11, **caractérisé en ce que** ledit au moins un paramètre de transmission variable stochastiquement varie stochastiquement chaque fois au début ou à la fin d'un cycle d'interrogation.

13. Procédé selon l'une des revendications 1 bis 12, **caractérisé en ce que** des alimentations de puissance (82) des unités d'émission (42) sont activées sensiblement seulement pendant la durée de la tranche de temps d'émission associée à l'unité d'émission (42) considérée.

14. Procédé selon la revendication 13, **caractérisé en ce que** les alimentations (82) des unités d'émission (42) sont activées en plus pendant une tranche de temps de commande commune à toutes les unités d'émission (42).

15. Procédé selon la revendication 14, **caractérisé en ce que** la longueur de la tranche de temps de commande ne représente qu'une fraction du cycle d'interrogation.

16. Procédé selon la revendication 14 ou 15, **caractérisé en ce qu'**une des tranches de temps qui sont attribuées à une unité d'émission (42) est utilisée pour accuser réception des instructions de commande reçues et/ou pour fournir des informations sur l'état de fonctionnement de l'unité d'émission (42).
